# EUROPÄISCHE PATENTANMELDUNG

(11) **EP 3 338 917 A1**
(43) Veröffentlichungstag der Anmeldung: **27.06.2018**
(21) Anmeldenummer: 16206212.9
(22) Anmeldetag: 22.12.2016
(51) Int. Cl.: B22F 3/105, B28B 1/00

(54) **VERFAHREN ZUR SCHICHTWEISEN FERTIGUNG EINES GRÜNLINGS AUS PULVERFÖRMIGEM WERKSTOFF MIT DEFINIERT ANGEORDNETEN EINSATZELEMENTEN**

(71) Anmelder: HILTI Aktiengesellschaft, 9494 Schaan (LI)
(72) Erfinder: Zivcec, Maria, 9470 Buchs (CH); Spring, Robert, 9467 Fruemsen (CH); Schneider, Roland, 6824 Schlins (AT)
(74) Vertreter: Hilti Aktiengesellschaft Corporate Intellectual Property

(57) **Zusammenfassung**

Verfahren zur schichtweisen Fertigung eines Grünlings (10) aus pulverförmigem Werkstoff mit Einsatzelementen, die an definierten Positionen im pulverförmigen Werkstoff angeordnet werden, bei dem der Grünling (10) in einer Aufbaurichtung (16) in N, N ≥ 2 aufeinanderfolgende zylinderförmige Querschnittsbereiche (11, 12, 13, 14, 15) aus einer zweidimensionalen Querschnittsfläche und einer Schichtdicke zerlegt wird. In den Querschnittsbereichen des Grünlings (10), die die definierten Positionen für die Einsatzelemente umfassen, werden Setzbereiche für die Einsatzelemente definiert und vor dem Anordnen der Einsatzelemente im pulverförmigen Werkstoff werden lose Pulverpartikel, die die Setzbereiche umgeben, zumindest teilweise miteinander verbunden.

## Beschreibung

### Technisches Gebiet

Die vorliegende Erfindung betrifft ein Verfahren zur schichtweisen Fertigung eines Grünlings aus pulverförmigem Werkstoff mit definiert angeordneten Einsatzelementen gemäß dem Oberbegriff des Anspruchs 1.

### Stand der Technik

Abrasive Bearbeitungswerkzeuge, wie Bohrkronen, Sägeblätter, Trennscheiben oder Schleifscheiben, umfassen Bearbeitungssegmente, die an einem rohr- oder scheibenförmigen Grundkörper befestigt werden. Abhängig vom Bearbeitungsverfahren des abrasiven Bearbeitungswerkzeugs werden die Bearbeitungssegmente als Bohrsegmente, Sägesegmente, Trennsegmente oder Schleifsegmente bezeichnet und unter dem Begriff "Bearbeitungssegmente" zusammengefasst. Die Bearbeitungssegmente werden aus pulverförmigem Werkstoff und Schneidelementen in Form von Hartstoffpartikeln aufgebaut. Dabei wird zwischen Bearbeitungssegmenten mit statistisch verteilten Hartstoffpartikeln und Bearbeitungssegmenten mit definiert angeordneten Hartstoffpartikeln unterschieden. Bei Bearbeitungssegmenten mit statistisch verteilten Hartstoffpartikeln werden der pulverförmige Werkstoff und die Hartstoffpartikel gemischt und in eine passende Werkzeugform eingefüllt und zunächst durch Kaltpressen zu einem Grünling geformt. Bei Bearbeitungssegmenten mit definiert angeordneten Hartstoffpartikeln wird der Grünling schichtweise aus pulverförmigem Werkstoff aufgebaut, in den die Hartstoffpartikel an definierten Positionen platziert werden. Die Grünlinge werden bei statistisch verteilten Hartstoffpartikeln und definiert angeordneten Hartstoffpartikeln durch Heißpressen und/oder Sintern zu einsatzfähigen Bearbeitungssegmenten verdichtet.

Bearbeitungssegmente mit statistisch verteilten Hartstoffpartikeln weisen mehrere Nachteile auf: Da sich die Hartstoffpartikel auch an der Oberfläche der Grünlinge befinden, weisen die zum Kaltpressen der Grünlinge notwendigen Werkzeugformen einen hohen Verschleiß auf. Außerdem entspricht die Verteilung der Hartstoffpartikel im Grünling nicht der anwendungstechnisch optimalen Verteilung. Die Nachteile von Bearbeitungssegmenten mit statistisch verteilten Hartstoffpartikeln führen dazu, dass für hochwertige Bearbeitungswerkzeuge trotz der höheren Kosten überwiegend Bearbeitungssegmente mit definiert angeordneten Hartstoffpartikeln eingesetzt werden.

EP 0 452 618 A1 beschreibt ein bekanntes Verfahren zur schichtweisen Fertigung eines Grünlings aus pulverförmigem Werkstoff mit Hartstoffpartikeln, die an definierten Positionen im pulverförmigen Werkstoff angeordnet werden. Das bekannte Verfahren basiert auf dreidimensionalen Daten des Grünlings und weist folgende Verfahrensschritte auf:
▪ der Grünling wird in einer Aufbaurichtung in N, N ≥ 2 aufeinanderfolgende zylinderförmige Querschnittsbereiche zerlegt, wobei jeder Querschnittsbereich aus einer zweidimensionalen Querschnittsfläche senkrecht zur Aufbaurichtung und einer Schichtdicke parallel zur Aufbaurichtung gebildet wird,
▪ auf eine Aufbauebene, die senkrecht zur Aufbaurichtung angeordnet ist, werden N, N ≥ 2 Pulverschichten des pulverförmigen Werkstoffs aufgebracht und
▪ die Hartstoffpartikel werden an den definierten Positionen im pulverförmigen Werkstoff angeordnet.

Die Hartstoffpartikel werden mittels einer Saugplatte aufgenommen und über dem Schichtaufbau positioniert. Durch eine Reduzierung der Ansaugkraft oder durch einen kurzen Druckluftstoß lösen sich die Hartstoffpartikel aus der Saugplatte und werden in die obere Pulverschicht des Schichtaufbaus platziert. Der Druckluftstoß darf nur so groß sein, dass der pulverförmige Werkstoff nicht verschoben wird und die Hartstoffpartikel an den vorgesehenen definierten Positionen der Verteilung angeordnet werden. Ein weiterer Nachteil besteht darin, dass die Hartstoffpartikel nur lose auf oder in der oberen Pulverschicht angeordnet sind. Beim Auftragen und Verteilen der nächsten Pulverschicht des pulverförmigen Werkstoffs mit Hilfe eines Auftragswerkzeugs in Form einer Rolle, eines Rakels oder einer Bürste können die Hartstoffpartikel vom Auftragswerkzeug aus ihren definierten Positionen verschoben werden und somit die Genauigkeit reduziert werden.

### Darstellung der Erfindung

Die Aufgabe der vorliegenden Erfindung besteht darin, bei der schichtweisen Fertigung von Grünlingen, die insbesondere zu Bearbeitungssegmenten für abrasive Bearbeitungswerkzeuge verdichtet werden, die Genauigkeit, mit der die vorgesehene Verteilung der Einsatzelemente im Grünling aufgebaut wird, zu erhöhen. Dabei soll die vorgesehene Verteilung der Einsatzelemente im Grünling auch bei der weiteren schichtweisen Fertigung des Grünlings beibehalten werden. Gleichzeitig sollen der Fertigungsaufwand für die Genauigkeit und der Anteil an unerwünschten Zusatzkomponenten, beispielsweise in Form eines Klebemittels oder Bindemittels, im Grünling möglichst gering sein.

Diese Aufgabe wird bei dem eingangs genannten Verfahren zur schichtweisen Fertigung eines Grünlings aus pulverförmigem Werkstoff mit definiert angeordneten Einsatzelementen erfindungsgemäß durch die Merkmale des unabhängigen Anspruchs 1 gelöst. Vorteilhafte Weiterbildungen sind in den abhängigen Ansprüchen angegeben.

Das Verfahren zur schichtweisen Fertigung eines Grünlings aus pulverförmigem Werkstoff mit Einsatzelementen, die an definierten Positionen im pulverförmigen Werkstoff angeordnet werden, ist erfindungsgemäß dadurch gekennzeichnet, dass in den Querschnittsbereichen des Grünlings, die die definierten Positionen für die Einsatzelemente umfassen, Setzbereiche für die Einsatzelemente definiert werden und vor dem Anordnen der Einsatzelemente im pulverförmigen Werkstoff lose Pulverpartikel, die die Setzbereiche umgeben, zumindest teilweise miteinander verbunden werden. Die verbundenen Pulverpartikel bilden Stützstrukturen für die Einsatzelemente. Die Einsatzelemente werden in die Stützstrukturen platziert, die verhindern, dass die Einsatzelemente beim Auftragen einer weiteren Pulverschicht des pulverförmigen Werkstoffs verschoben werden, so dass die definierten Positionen der Einsatzelemente mit einer hohen Genauigkeit während des Schichtaufbaus eingehalten werden können.

Grünlinge, die mittels des erfindungsgemäßen Verfahrens schichtweise gefertigt werden, bestehen aus mehreren in Aufbaurichtung aufeinanderfolgenden zylinderförmigen Querschnittsbereichen mit einer zweidimensionalen Querschnittsfläche senkrecht zur Aufbaurichtung und einer Schichtdicke parallel zur Aufbaurichtung, wobei die Querschnittsbereiche als gerade Zylinder mit einer beliebigen Querschnittsfläche ausgebildet sind. Die Einsatzelemente werden in einer dreidimensionalen Verteilung im Grünling angeordnet, wobei die Positionen der Einsatzelemente im Hinblick auf eine gute Schneidperformance berechnet werden und als definierte Positionen bezeichnet werden. Für jedes Einsatzelement ist im Grünling ein Setzvolumen vorgesehen, in das das Einsatzelement angeordnet wird. Die Setzvolumina für die Einsatzelemente werden wie der Grünling in aufeinanderfolgende Bereiche zerlegt, die im Weiteren als Setzbereiche bezeichnet werden. Abhängig von der Höhe der Setzvolumina können die Setzvolumina aus einem Setzbereich oder aus mehreren in Aufbaurichtung aufeinander folgenden Setzbereichen zusammengesetzt sein. Die Anzahl der aufeinander folgenden Setzbereiche ist von den Schichtdicken der Querschnittsbereiche und den Abmessungen der Einsatzelemente, insbesondere der Höhe in Aufbaurichtung, abhängig.

Das erfindungsgemäße Verfahren zur schichtweisen Fertigung eines Grünlings zeichnet sich dadurch aus, dass vor dem Anordnen der Einsatzelemente im Grünling Stützstrukturen erzeugt werden, die die Setzbereiche für die Einsatzelemente in der Aufbauebene zumindest teilweise umgeben. Der pulverförmige Werkstoff besteht beim Auftragen der Pulverschichten aus losen Pulverpartikeln, die keine Verbindung untereinander bilden und gegeneinander verschoben werden können. Die Stützstrukturen für die Einsatzelemente werden dadurch erzeugt, dass im pulverförmigen Werkstoff lose Pulverpartikel miteinander verbunden werden und sie sorgen dafür, dass die Einsatzelemente beim Auftragen einer weiteren Pulverschicht des pulverförmigen Werkstoffes nicht verschoben werden und ihre Positionen beim Schichtaufbau einhalten können. Dadurch, dass die Pulverpartikel des pulverförmigen Werkstoffs nur um die Setzbereiche verbunden werden, kann der Anteil an unerwünschten Zusatzkomponenten, beispielsweise in Form eines Klebemittels oder Bindemittels, begrenzt werden. Unerwünschte Zusatzkomponenten im Grünling müssen bei einem Verdichtungsprozess durch Heißpressen und/oder Sintern entfernt werden. Können die Zusatzkomponenten nicht vollständig entfernt werden, kann die Qualität des verdichteten Bauteils leiden.

Die Stützstrukturen weisen eine geschlossene oder nicht-geschlossene Querschnittsform und sind beispielsweise ringförmig oder ringabschnittsförmig mit einer Ringbreite und einer Ringhöhe ausgebildet. Der Querschnitt der Ringform oder Ringabschnittsform ist beispielsweise als Kreisring oder Kreisringabschnitt oder als mehrteiliger Ring oder mehrteiliger Ringabschnitt ausgebildet. Dabei wird die Ring- oder Ringabschnittsform vorteilhaft an die Geometrie der Einsatzelemente angepasst. Die Ringbreite und die Ringhöhe werden so ausgebildet, dass die Stützstrukturen im pulverförmigen Werkstoff befestigt sind. Bei vielen Verfahren zur schichtweisen Fertigung von Grünlingen wird der pulverförmige Werkstoff mit Hilfe eines Werkzeugs in Form einer Rolle, eines Rakels oder einer Bürste aufgetragen, wobei das Werkzeug in einer Vorschubrichtung über den Schichtaufbau bewegt wird. Das Werkzeug wird in ein-maligen Vorschubbewegung oder in einer zwei-maligen Vorschubbewegung über den pulverförmigen Werkstoff bewegt. Bei einer ein-maligen Vorschubbewegung kann es ausreichen, wenn der Stützring als Stützwand auf der abgewandten Seite ausgebildet ist, bei einer zwei-maligen Vorschubbewegung (Hin- und Rückbewegung) müssen auf einander gegenüberliegenden Seiten Stützwände ausgebildet sein.

Das erfindungsgemäße Verfahren zur schichtweisen Fertigung eines Grünlings ist für pulverförmige Werkstoffe, die auch als Werkstoffpulver bezeichnet werden, geeignet. Unter dem Begriff "pulverförmige Werkstoffe" werden sämtliche Werkstoffe zusammengefasst, die im Ausgangszustand fest sind und aus losen, d.h. nicht verbundenen, Pulverpartikeln bestehen. Pulverförmige Werkstoffe können aus einem Werkstoffpulver bestehen oder als Gemisch aus verschiedenen Werkstoffpulvern zusammengesetzt sein. Unter dem Begriff "Einsatzelemente" werden sämtliche Elemente zusammengefasst, die in ein Bauteil integriert werden können. Dazu gehören u.a. Schneidelemente, Sensorelemente, Werkstofffüllungen und Platzhalteelemente. Unter dem Begriff "Schneidelement" werden sämtliche Schneidmittel für abrasive Bearbeitungssegmente zusammengefasst. Dazu gehören vor allem einzelne Hartstoffpartikel (Partikel von Hartstoffen), Verbundteile aus mehreren Hartstoffpartikeln und beschichtete oder gekapselte Hartstoffpartikel. Hartstoffe zeichnen sich durch eine besondere Härte aus. Dabei lassen sich Hartstoffe zum einen in natürliche und synthetische Hartstoffe und zum anderen in metallische und nichtmetallische Hartstoffe unterteilen. Zu den natürlichen Hartstoffen gehören u.a. natürliche Diamanten, Korund und andere harte Mineralien und zu den synthetischen Hartstoffen gehören u.a. synthetische Diamanten, hochschmelzende Karbide, Boride, Nitride und Silizide. Zu den metallischen Hartstoffen gehören u.a. die hochschmelzenden Karbide, Boride, Nitride und Silizide der Übergangsmetalle der vierten bis sechsten Gruppe des Periodensystems und zu den nichtmetallischen Hartstoffen gehören u.a. Diamant, Korund, andere harte Mineralien, Siliziumkarbid und Borkarbid.

Bevorzugt werden die losen Pulverpartikel, die die Setzbereiche für die Einsatzelemente umgeben, in einer geschlossenen Stützstruktur miteinander verbunden. Eine Stützstruktur wird als geschlossen bezeichnet, wenn die Stützstruktur in der Aufbauebene einen geschlossenen Umfang aufweist und der Setzbereich vollumfänglich von der Stützstruktur umgeben ist. Die Einsatzelemente werden in die geschlossene Stützstruktur platziert, die verhindert, dass die Einsatzelemente beim Auftragen einer weiteren Pulverschicht des pulverförmigen Werkstoffes verschoben werden und die Positionen der Einsatzelemente mit einer hohen Genauigkeit während des Schichtaufbaus eingehalten werden können. Die Ausbildung von geschlossenen Stützstrukturen bietet sich bei Verfahren zur Fertigung von Grünlingen an, bei denen der pulverförmige Werkstoff mit verschiedenen Vorschubrichtungen aufgetragen wird. Außerdem ist die Stabilität von geschlossenen Stützstrukturen grösser als von Stützstrukturen mit einem offenen Umfang.

Alternativ werden die losen Pulverpartikel, die die Setzbereiche für die Einsatzelemente umgeben, in einer nicht-geschlossenen Stützstruktur miteinander verbunden. Eine Stützstruktur wird als nicht-geschlossen bezeichnet, wenn die Stützstruktur in der Aufbauebene einen offenen Umfang aufweist und der Setzbereich nicht vollumfänglich von der Stützstruktur umgeben ist. Die Einsatzelemente werden in die nicht-geschlossene Stützstruktur platziert, die verhindert, dass die Einsatzelemente beim Auftragen einer weiteren Schicht des pulverförmigen Werkstoffes verschoben werden. Bei nicht-geschlossenen Stützstrukturen sind der Fertigungsaufwand beim Erstellen und der Anteil an Zusatzkomponenten gegenüber geschlossenen Stützstrukturen reduziert.

In einer besonders bevorzugten Ausführung weist die nicht-geschlossene Stützstruktur mehrere Stützabschnitte auf, wobei die Stützabschnitte um die Einsatzelemente angeordnet werden. Mehrere Stützabschnitte, die die Einsatzelemente umgeben, haben den Vorteil, dass die Einsatzelemente beim Auftragen einer weiteren Pulverschicht des pulverförmigen Werkstoffs nicht verschoben werden und die Positionen der Einsatzelemente mit einer hohen Genauigkeit während des Schichtaufbaus eingehalten werden können. Durch die Verwendung einer nicht-geschlossenen Stützstruktur werden der Fertigungsaufwand beim Erstellen und der Anteil an Zusatzkomponenten gegenüber geschlossenen Stützstrukturen reduziert.

In einer alternativen besonders bevorzugten Ausführung weist die nicht-geschlossene Stützstruktur zumindest einen Stützabschnitt auf, wobei der Stützabschnitt auf einer der Auftragsrichtung der nächsten Pulverschicht abgewandten Seite der Einsatzelemente angeordnet wird. Durch die Verwendung von nicht-geschlossenen Stützstrukturen mit einem Stützabschnitt können der Fertigungsaufwand beim Erstellen und der Anteil an Zusatzkomponenten weiter reduziert werden. Der Stützabschnitt wird so platziert, dass das Einsatzelement beim Auftragen der nächsten Pulverschicht vom Stützabschnitt gegen Verschieben gesichert wird. Dazu wird der Stützabschnitt auf der Seite der Einsatzelemente angeordnet, die der Auftragsrichtung der nächsten Pulverschicht abgewandt ist.

Grünlinge, die mittels des erfindungsgemäßen Verfahrens zur schichtweisen Fertigung hergestellt werden, sind in Aufbaurichtung aus N, N ≥ 2 zylinderförmigen Querschnittsbereichen aufgebaut, die aus der Querschnittsfläche senkrecht zur Aufbaurichtung und der Schichtdicke parallel zur Aufbaurichtung zusammengesetzt sind. Jeder Querschnittsbereich umfasst mindestens eine äußere zylinderförmige Mantelfläche, die auch als Außenmantelfläche bezeichnet wird. Bei Grünlingen mit innenliegenden Aussparungen umfassen die Querschnittsbereiche zusätzlich eine oder mehrere innere zylinderförmige Mantelflächen, die auch als Innenmantelflächen bezeichnet werden. Für die Außen- und Innenmantelflächen des Grünlings werden Grenzringe definiert, wobei die Grenzringe der Außenmantelflächen als äußere Grenzringe oder Außenringe und die Grenzringe der Innenmantelflächen als innere Grenzringe oder Innenringe bezeichnet werden. Unter dem Begriff "Grenzring" werden sowohl "äußere Grenzringe" als auch "innere Grenzringe" zusammengefasst. Die äußeren Grenzringe weisen Außengeometrien auf, die den Außenmantelflächen der Querschnittsbereiche entsprechen, und die inneren Grenzringe weisen Innengeometrien auf, die den Innenmantelflächen der Querschnittsbereiche entsprechen. Die Schichtdicken der Querschnittsbereiche definieren die Höhen der Grenzringe.

In einer ersten Variante des Verfahrens wird für den ersten Querschnittsbereich ein Grundelement mit einer Grundfläche, die der ersten Querschnittsfläche des ersten Querschnittsbereichs entspricht, und einer Höhe, die der ersten Schichtdicke des ersten Querschnittsbereichs entspricht, definiert und die losen Pulverpartikel des pulverförmigen Werkstoffes werden im Grundelement miteinander verbunden. Grünlinge, die mittels des erfindungsgemäßen Verfahrens schichtweise gefertigt werden, werden nach dem Schichtaufbau einem Verdichtungsprozess unterzogen. Dazu müssen die Grünlinge aus dem umgebenden pulverförmigen Werkstoff entnommen werden, ohne dass pulverförmiger Werkstoff aus dem Grünling austritt. Die verbundenen Pulverpartikel des Grundelementes bilden einen Boden für den Grünling und verhindern ein Austreten des pulverförmigen Werkstoffs aus der Grundfläche.

In einer zweiten Variante des Verfahrens wird für jede zylinderförmige Mantelfläche des ersten Querschnittsbereichs ein erster Grenzring mit einer Geometrie, die der zylinderförmigen Mantelfläche des ersten Querschnittsbereichs entspricht, und einer Höhe, die der ersten Schichtdicke des ersten Querschnittsbereichs entspricht, definiert, die erste Pulverschicht des pulverförmigen Werkstoffes wird auf ein Substrat aufgebracht und die ersten Grenzringe werden mit dem Substrat verbunden. Wenn der Grünling gemäß der zweiten Variante des Verfahrens auf einem Substrat aufgebaut wird, bildet das Substrat einen Boden für den Grünling und verhindert ein Austreten des pulverförmigen Werkstoffs. Als Substrat dienen beispielsweise dünne Metallplatten.

Besonders bevorzugt werden die Stützstrukturen mit dem Grundelement oder mit dem Substrat verbunden. Bei Stützstrukturen, die mit dem Grundelement oder dem Substrat verbunden sind, ist die Gefahr reduziert, dass die Stützstrukturen beim Auftragen einer weiteren Pulverschicht des pulverförmigen Werkstoffs vom Auftragswerkzeug verschoben werden.

Bevorzugt wird für jede zylinderförmige Mantelfläche des zweiten bis N-1-ten Querschnittsbereichs ein zweiter bis N-1-ter Grenzring mit einer Geometrie, die der zylinderförmigen Mantelfläche des zweiten bis N-1-ten Querschnittsbereichs entspricht, und einer Höhe, die der Schichtdicke des zweiten bis N-1-ten Querschnittsbereichs entspricht, definiert wird. Grünlinge, die mittels des erfindungsgemäßen Verfahrens schichtweise gefertigt werden, bestehen aus mehreren aufeinanderfolgenden zylinderförmigen Querschnittsbereichen mit einer Querschnittsfläche senkrecht zur Aufbaurichtung und einer Schichtdicke parallel zur Aufbaurichtung. Mit Hilfe der zweiten bis N-1-ten Grenzringe kann der pulverförmige Werkstoff des Grünlings vom umgebenden pulverförmigen Werkstoff abgegrenzt werden. Jeder zweite bis N-1-te Querschnittsbereich weist eine äußere zylinderförmige Mantelfläche auf. Bei Grünlingen mit innenliegenden Aussparungen weisen die zweiten bis N-1-ten Querschnittsbereiche zusätzlich eine oder mehrere innere zylinderförmige Mantelflächen auf. Für die äußere Mantelfläche und jede innere Mantelfläche des Grünlings wird ein zweiter bis N-1-ter Grenzring mit einer Geometrie und einer Höhe definiert.

Besonders bevorzugt werden die losen Pulverpartikel der zweiten bis N-1-ten Grenzringe miteinander verbunden und die zweiten bis N-1-ten Grenzringe werden jeweils mit dem darunter liegenden Grundelement oder den darunter liegenden ersten bis N-2-ten Grenzringen verbunden. Die Grenzringe der Querschnittsbereiche grenzen den Grünling vom umgebenden pulverförmigen Werkstoff ab. Durch die Verbindung der übereinander angeordneten Grenzringe kann eine geschlossene Außengeometrie erzeugt werden.

In einer ersten Variante wird für jede zylinderförmige Mantelfläche des N-ten Querschnittsbereich ein N-ter Grenzring mit einer Geometrie, die der zylinderförmigen Mantelfläche des N-ten Querschnittsbereichs entspricht, und einer Höhe, die der N-ten Schichtdicke des N-ten Querschnittsbereichs entspricht, definiert, die losen Pulverpartikel der N-ten Grenzringe werden miteinander verbunden und die N-ten Grenzringe werden mit den darunter liegenden N-1-ten Grenzringen verbunden. Mit Hilfe der N-ten Grenzringe kann der pulverförmige Werkstoff des Grünlings vom umgebenden pulverförmigen Werkstoff abgegrenzt werden. Um ein Austreten des pulverförmigen Werkstoffs aus dem Grünling zu verhindern, werden die losen Pulverpartikel der N-ten Grenzringe miteinander verbunden und die N-ten Grenzringe werden mit den darunter liegenden N-1-ten Grenzringen verbunden.

In einer zweiten Variante wird für den N-ten Querschnittsbereich ein Deckelement mit einer Deckfläche, die der N-ten Querschnittsfläche des N-ten Querschnittsbereichs entspricht, und einer Höhe, die der N-ten Schichtdicke des N-ten Querschnittsbereichs entspricht, definiert, die losen Pulverpartikel des pulverförmigen Werkstoffes im Deckelement werden miteinander verbunden und das Deckelement wird mit den darunter liegenden N-1-ten Grenzringen verbunden. Wenn der Grünling gemäß der zweiten Variante des Verfahrens aufgebaut wird, bildet der N-te Querschnittsbereich ein Deckelement für den Grünling und verhindert ein Austreten des pulverförmigen Werkstoffs. Dazu werden die losen Pulverpartikel des N-ten Querschnittsbereichs miteinander verbunden und das Deckelement wird mit den darunter liegenden N-1-ten Grenzringen verbunden. Die zweite Variante hat den Vorteil, dass der Grünling an allen Seiten geschlossen ist, so dass kein pulverförmiger Werkstoff aus dem Grünling austreten kann.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: einen ersten Grünling, der mit Hilfe des erfindungsgemäßen Verfahrens zur schichtweisen Fertigung aus fünf in einer Aufbaurichtung übereinander liegenden zylinderförmigen Querschnittsbereichen hergestellt wird;
- FIGN. 2A-E: die fünf Querschnittsbereiche des ersten Grünlings der FIG. 1, die aus einer zweidimensionalen Querschnittsfläche senkrecht zur Aufbaurichtung und einer Schichtdicke parallel zur Aufbaurichtung bestehen;
- FIGN. 3A, B: einen ersten und zweiten Querschnitt durch den ersten Grünling der FIG. 1 parallel zur Aufbaurichtung entlang der Schnittebenen A-A in den FIGN. 2A-E (FIG. 3A) und entlang der Schnittebenen B-B in den FIGN. 2A-E (FIG. 3B);
- FIGN. 4A-L: die aufeinander folgenden Verfahrensschritte des erfindungsgemäßen Verfahrens zur schichtweisen Fertigung des ersten Grünlings der FIG. 1 mit definiert angeordneten Hartstoffpartikeln;
- FIGN. 5A-E: fünf zylinderförmige Querschnittsbereiche eines zweiten Grünlings, der mit Hilfe des erfindungsgemäßen Verfahrens zur schichtweisen Fertigung eines Grünlings auf einem Substrat aufgebaut wird;
- FIGN. 6A, B: einen ersten und zweiten Querschnitt durch den zweiten Grünling parallel zur Aufbaurichtung entlang der Schnittebenen A-A in den FIGN. 5A-E (FIG. 6A) und entlang der Schnittebenen B-B in den FIGN. 5A-E (FIG. 6B);
- FIGN. 7A-E: fünf zylinderförmige Querschnittsbereiche eines dritten Grünlings, der als Quader mit einer innenliegenden Aussparung mit Hilfe des erfindungsgemäßen Verfahrens zur schichtweisen Fertigung eines Grünlings aufgebaut wird;
- FIGN. 8A, B: einen ersten und zweiten Querschnitt durch den dritten Grünling parallel zur Aufbaurichtung entlang der Schnittebenen A-A in den FIGN. 7A-E (FIG. 8A) und entlang der Schnittebenen B-B in den FIGN. 7A-E (FIG. 8B); und
- FIGN. 9A, B: eine erste und zweite Querschnittsform für Stützringe, die Setzbereiche für ein Einsatzelement umgeben.

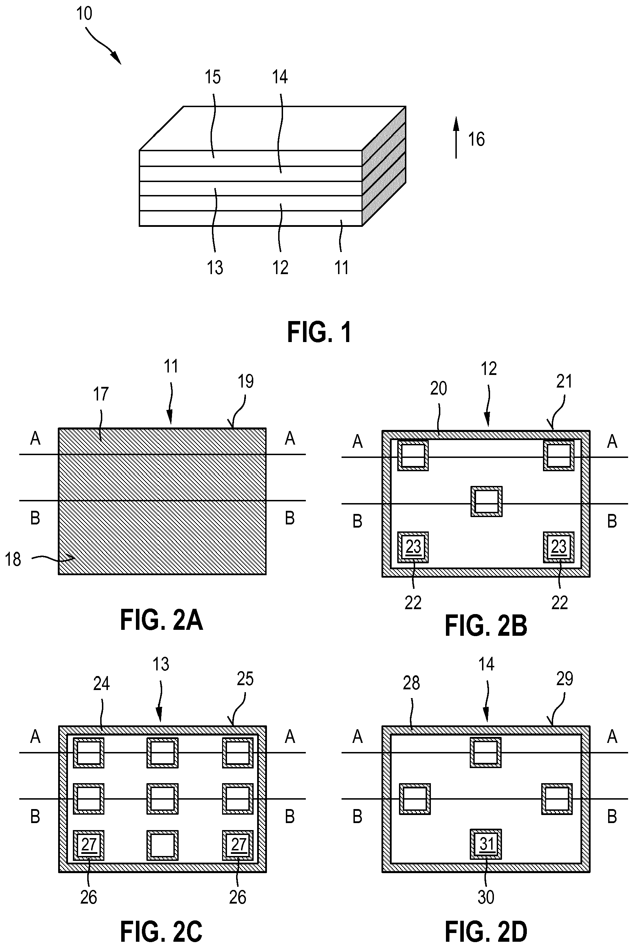

**FIG. 1** zeigt einen als Quader ausgebildeten Grünling **10,** der mit Hilfe des erfindungsgemäßen Verfahrens zur schichtweisen Fertigung eines Grünlings aus pulverförmigem Werkstoff mit definiert angeordneten Einsatzelementen hergestellt wird und im Folgenden als erster Grünling 10 bezeichnet wird. Der erste Grünling 10 wird in einem Schichtaufbau aus fünf übereinander liegenden zylinderförmigen Querschnittsbereichen **11, 12, 13, 14, 15** hergestellt, die in einer Aufbaurichtung **16** aufeinander gestapelt werden. Die zylinderförmigen Querschnittsbereiche 11-15 weisen parallel zur Aufbaurichtung 16 eine Schichtdicke **dᵢ**, i = 1 bis 5 und senkrecht zur Aufbaurichtung 16 eine Querschnittsfläche auf. Die Schichtdicken dᵢ, i = 1 bis 5 können einheitlich sein oder die einzelnen Querschnittsbereiche 11-15 weisen unterschiedliche Schichtdicken auf.

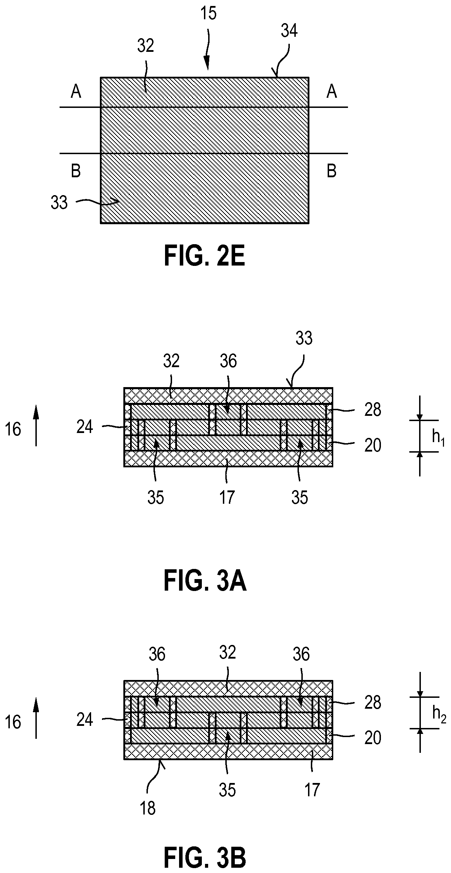

Um den ersten Grünling 10 im Schichtaufbau herstellen zu können, wird der Quader 10 in Aufbaurichtung 16 in die fünf zylinderförmigen Querschnittsbereiche 11-15 zerlegt, die in den FIGN. 2A**-E** dargestellt sind. Dabei zeigt FIG. 2A den ersten Querschnittsbereich 11, FIG. 2B den zweiten Querschnittsbereich 12, FIG. 2C den dritten Querschnittsbereich 13, FIG. 2D den vierten Querschnittsbereich 14 und FIG. 2E den fünften Querschnittsbereich 15.

Der erste Querschnittsbereich 11 bildet ein Grundelement **17** mit einer Grundfläche **18,** die die der ersten Querschnittsfläche des ersten Querschnittsbereichs 11 entspricht, und einer ersten Außenmantelfläche **19.** Der zweite Querschnittsbereich 12 umfasst einen zweiten Außenring **20** mit einer zweiten Außenmantelfläche **21** und fünf zweiten Stützringen **22,** die zweite Setzbereiche **23** umgeben. Der dritte Querschnittsbereich 13 umfasst einen dritten Außenring **24** mit einer dritten Außenmantelfläche **25** und neun dritten Stützringen **26,** die dritte Setzbereiche **27** umgeben. Der vierte Querschnittsbereich 14 umfasst einen vierten Außenring **28** mit einer vierten Außenmantelfläche **29** und vier vierten Stützringe **30,** die vierte Setzbereiche **31** umgeben. Der fünfte Querschnittsbereich 15 bildet ein Deckelement **32** mit einer Deckfläche **33,** die der fünften Querschnittsfläche des fünften Querschnittsbereichs 15 entspricht, und einer fünften Außenmantelfläche **34.**

Zur Unterscheidung werden die Außenringe 20, 24, 28 als i-te Außenringe und die Stützringe 22, 26, 30 als i-te Stützringe bezeichnet. Die Außenringe 20, 24, 28 weisen eine Außengeometrie, die der Außenmantelfläche 21, 26, 29 des jeweiligen Querschnittsbereichs 12, 13, 14 entspricht, und eine Höhe, die der Schichtdicke d₂, d₃, d₄ des jeweiligen Querschnittsbereichs 12, 13, 14 entspricht, auf. Die Außenringe 20, 24, 28 sind in Form eines Rechteckzylinders aufgebaut und grenzen den ersten Grünling 10 von dem umgebenden pulverförmigen Werkstoff ab. Im Ausführungsbeispiel sind die Setzbereiche 23, 27, 31 quadratisch ausgebildet und von quadratischen Stützringen 22, 26, 30 umgeben. Anstelle der geschlossenen quadratischen Stützringe 22, 26, 30 können andere geschlossene Querschnittsformen oder nicht-geschlossene Querschnittsformen für die Stützringe verwendet werden.

**FIGN. 3A****, B** zeigen einen ersten und zweiten Querschnitt durch den ersten Grünling 10 der FIG. 1 parallel zur Aufbaurichtung 16 entlang der Schnittebenen A-A in den FIGN. 2A-E (FIG. 3A) und entlang der Schnittebenen B-B in den FIGN. 2A-E (FIG. 3B). Die fünf zylinderförmigen Querschnittsbereiche 11-15 des ersten Grünlings 10 sind in Aufbaurichtung 16 übereinander angeordnet.

Beim Schichtaufbau des ersten Grünlings 10 wird eine geschlossene Außengeometrie erzeugt, die ein Austreten von pulverförmigem Werkstoff aus dem ersten Grünling 10 verhindert. Die geschlossene Außengeometrie des ersten Grünlings 10 wird von dem Grundelement 17, den Außenringen 20, 24, 28 und dem Deckelement 32 gebildet. Mit Hilfe der Außenringe 20, 24, 28 kann der pulverförmige Werkstoff des ersten Grünlings 10 vom umgebenden pulverförmigen Werkstoff abgegrenzt werden. Das Grundelement 17 wird mit dem zweiten Außenring 20 verbunden, der zweite Außenring 20 wird mit dem dritten Außenring 24 verbunden, der dritte Außenring 24 wird mit dem vierten Außenring 28 verbunden und der vierte Außenring 28 wird mit dem Deckelement 32 verbunden.

Im zweiten und dritten Querschnittsbereich 12, 13 werden fünf erste Stützstrukturen **35** aufgebaut und im dritten und vierten Querschnittsbereich 13, 14 werden vier zweite Stützstrukturen **36** aufgebaut. Die ersten Stützstrukturen 35 werden von den zweiten Stützringen 19 und den darüber liegenden dritten Stützringen 22 gebildet und die zweiten Stützstrukturen 36 werden von den vierten Stützringen 24 und den darunter liegenden dritten Stützringen 22 gebildet. Die ersten Stützstrukturen 35 weisen eine erste Einsatzhöhe **h₁** auf und die zweiten Stützstrukturen 36 weisen eine zweite Einsatzhöhe **h₂** auf. FIG. 3A zeigt zwei erste Stützstrukturen 35 und eine zweite Stützstruktur 36 und FIG. 3B zeigt eine erste Stützstruktur 35 und zwei zweite Stützstrukturen 36.

Im Ausführungsbeispiel des ersten Grünlings 10 weisen die erste und zweite Stützstruktur 35, 36 die gleiche Querschnittsform und die gleiche Einsatzhöhe auf. Alternativ können die ersten Stützstrukturen 35 eine erste Querschnittsform und eine erste Einsatzhöhe h₁ und die zweiten Stützstrukturen 36 eine zweite Querschnittsform und eine zweite Einsatzhöhe h₂ aufweisen, die voneinander verschieden sind. Unterschiedliche Querschnittsformen für die ersten und zweiten Stützstrukturen bieten sich beispielsweise an, wenn unterschiedliche erste und zweite Einsatzelemente in den Stützstrukturen angeordnet werden.

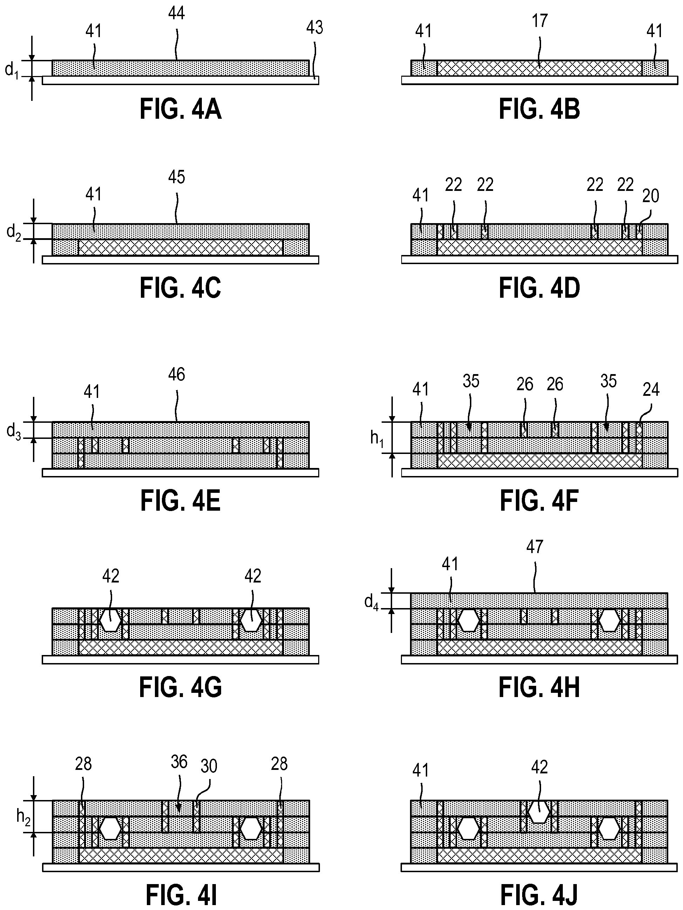

**FIGN. 4A-L** zeigen die aufeinanderfolgenden Verfahrensschritte des erfindungsgemäßen Verfahrens zur schichtweisen Fertigung des ersten Grünlings 10 der FIG. 1 aus pulverförmigem Werkstoff **41** mit definiert angeordneten Einsatzelementen **42.** Der erste Grünling 10 wird in einem nachfolgenden Verdichtungsprozess beispielsweise durch Heißpressen und/oder Sintern zu einem Bearbeitungssegment für ein abrasives Bearbeitungswerkzeug verdichtet. Der Grünling 10 wird aus dem pulverförmigen Werkstoff 41 und Einsatzelementen in Form von Schneidelementen hergestellt, die als einzelne Hartstoffpartikel 42 ausgebildet sind. Die Hartstoffpartikel 42 entstammen einer Mischung von Hartstoffpartikeln, die durch einen minimalen Durchmesser **Dₘᵢₙ** und einen maximalen Durchmesser **Dₘₐₓ** charakterisiert sind, wobei 95 % der Hartstoffpartikel grösser als der minimale Durchmesser Dₘᵢₙ und kleiner als der maximale Durchmesser Dₘₐₓ sind.

Der erste Grünling 10 wird schichtweise mit Hilfe einer Vorrichtung hergestellt, die eine Aufbauebene **43,** eine Pulverzuführung und einen Druckkopf umfasst. Mit Hilfe der Pulverzuführung wird eine erste Pulverschicht **44** des pulverförmigen Werkstoffs 41 mit der ersten Schichtdicke d₁ aufgetragen (FIG. 4A). Der Druckkopf trägt im ersten Querschnittsbereich 11 eine Klebeschicht auf, die lose Pulverpartikel des pulverförmigen Werkstoffs 41 zum Grundelement 17 verbindet, außerhalb des Grundelements 17 befinden sich lose Pulverpartikel des pulverförmigen Werkstoffs 41 (FIG. 4B).

Mit Hilfe der Pulverzuführung wird eine zweite Pulverschicht **45** des pulverförmigen Werkstoffes 41 mit der zweiten Schichtdicke d₂ aufgetragen (FIG. 4C). Der Druckkopf trägt im Bereich des zweiten Außenrings 20 und der zweiten Stützringe 22 Kleber auf, der die losen Pulverpartikel des pulverförmigen Werkstoffs 41 zum zweiten Außenring 20 und den zweiten Stützringen 22 verbindet (FIG. 4D). Mit Hilfe der Pulverzuführung wird eine dritte Pulverschicht **46** des pulverförmigen Werkstoffes 41 mit der dritten Schichtdicke d₃ aufgetragen (FIG. 4E). Der Druckkopf trägt im Bereich des dritten Außenrings 24 und der dritten Stützringe 26 Kleber auf, der lose Pulverpartikel des pulverförmigen Werkstoffs 41 zum dritten Außenring 24 und den dritten Stützringen 26 verbindet (FIG. 4F).

Die erste Einsatzhöhe h₁ der ersten Stützstrukturen 35 ist nach dem Fertigen des dritten Querschnittsbereichs 13 erreicht und die Hartstoffpartikel 42 werden innerhalb der ersten Stützstrukturen 35 angeordnet (FIG. 4G). Im Ausführungsbeispiel ist die erste Einsatzhöhe h₁ grösser als der maximale Durchmesser Dₘₐₓ der Hartstoffpartikel 42. Eine erste Einsatzhöhe h₁, die grösser als der maximale Durchmesser Dₘₐₓ der Hartstoffpartikel 42 ist, hat den Vorteil, dass die platzierten Hartstoffpartikel 42 nahezu vollständig innerhalb der ersten Stützstrukturen 35 angeordnet sind und die Gefahr, dass Hartstoffpartikel 42 beim Auftragen einer weiteren Pulverschicht verschoben werden, weiter reduziert ist.

Nachdem die Hartstoffpartikel 42 innerhalb der ersten Stützstrukturen 35 angeordnet sind, wird der Schichtaufbau des ersten Grünlings 10 fortgesetzt. Mit Hilfe der Pulverzuführung wird eine vierte Pulverschicht **47** des pulverförmigen Werkstoffes 41 mit der vierten Schichtdicke d₄ aufgetragen (FIG. 4H). Der Druckkopf trägt im Bereich des vierten Außenrings 28 und der vierten Stützringe 30 Kleber auf, der lose Pulverpartikel des pulverförmigen Werkstoffs 41 zum vierten Außenring 28 und den vierten Stützringen 30 verbindet (FIG. 4I). Die zweite Einsatzhöhe h₂ der zweiten Stützstrukturen 36 ist nach dem Fertigen des vierten Querschnittsbereichs 14 erreicht und die Hartstoffpartikel 42 werden innerhalb der zweiten Stützstrukturen 36 angeordnet (FIG. 4J).

Im Ausführungsbeispiel stimmen die erste Einsatzhöhe h₁ der ersten Stützstrukturen 35 und die zweite Einsatzhöhe h₂ der zweiten Stützstrukturen 36 überein. Alternativ können die erste und zweite Einsatzhöhe h₁, h₂ verschieden sein. Die Verwendung von ersten und zweiten Stützstrukturen 35, 36 mit unterschiedlichen Einsatzhöhe, in die der gleiche Typ von Einsatzelementen angeordnet wird, bietet sich vorteilhaft bei Grünlingen an, die zu Bearbeitungssegmenten für abrasive Bearbeitungswerkzeuge weiterverarbeitet werden. Bei abrasiven Bearbeitungswerkzeugen müssen an der Oberseite der Bearbeitungssegmente Einsatzelemente freiliegen, die einen Untergrund oder ein Werkstück bearbeiten. Dazu werden die Bearbeitungssegmente üblicherweise geschärft, bis an der Oberseite Einsatzelemente freigelegt sind. Das Schärfen der Bearbeitungssegmente kann entfallen oder zumindest reduziert werden, wenn die Einsatzelemente im Bereich der Oberseite in Stützstrukturen angeordnet werden, deren Höhe kleiner als ein minimaler Durchmesser der Einsatzelemente ist. Beim Schichtaufbau wird nach dem Platzieren der Einsatzelemente eine weitere Pulverschicht aufgetragen. Über die Dicke der Pulverschicht kann bestimmt werden, ob und wie weit die Einsatzelemente an der Oberseite vorstehen.

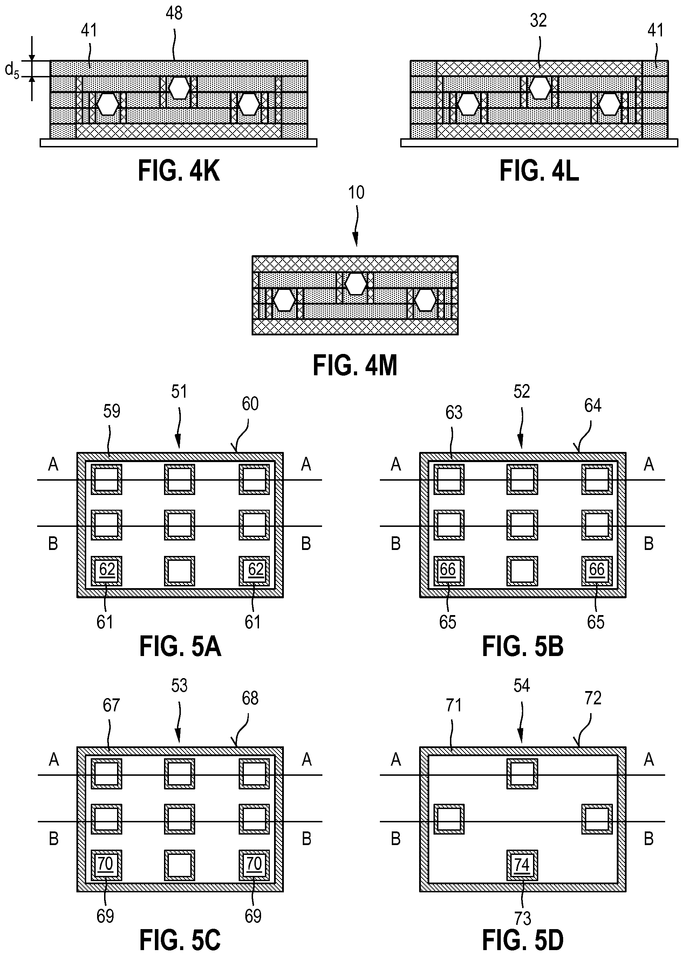

Nachdem die Hartstoffpartikel 42 innerhalb der zweiten Stützstrukturen 36 angeordnet sind, wird der Schichtaufbau des ersten Grünlings 10 fortgesetzt. Mit Hilfe der Pulverzuführung wird eine fünfte Pulverschicht **48** des pulverförmigen Werkstoffes 41 mit der fünften Schichtdicke d₅ aufgetragen (FIG. 4K). Der Druckkopf trägt im fünften Querschnittsbereich 15 eine Klebeschicht auf, die lose Pulverpartikel des pulverförmigen Werkstoffs 41 zum Deckelement 32 verbindet, außerhalb des Deckelements 32 befinden sich lose Pulverpartikel des pulverförmigen Werkstoffs 41 (FIG. 4L). FIG. 4M zeigt den aus dem pulverförmigen Werkstoff 41 schichtweise hergestellten ersten Grünling 10 mit mehreren definiert angeordneten Einsatzelementen 42.

Der erste Grünling 10 wird schichtweise aus fünf Pulverschichten 44-48 mit dem gleichen pulverförmigen Werkstoff 41 hergestellt. Alternativ können die fünf Pulverschichten 44-48 des ersten Grünlings 10 aus unterschiedlichen pulverförmigen Werkstoffen 41 hergestellt werden. Bei Grünlingen, die zu Bearbeitungssegmenten für abrasive Bearbeitungswerkzeuge weiterverarbeitet werden, kann beispielsweise für die erste Pulverschicht 44 ein erster pulverförmiger Werkstoff und für die weiteren Pulverschichten 45-48 ein zweiter pulverförmiger Werkstoff verwendet werden, wobei die Eigenschaften des ersten pulverförmigen Werkstoffes im Hinblick auf die Verbindung der Bearbeitungssegmente mit dem Grundkörper und die Eigenschaften des zweiten pulverförmigen Werkstoffes im Hinblick auf die mechanische Anbindung der Einsatzelemente ausgewählt werden. Wenn die Bearbeitungssegmente mit dem Grundkörper verschweißt werden sollen, wird ein schweißbarer erster pulverförmiger Werkstoff ausgewählt.

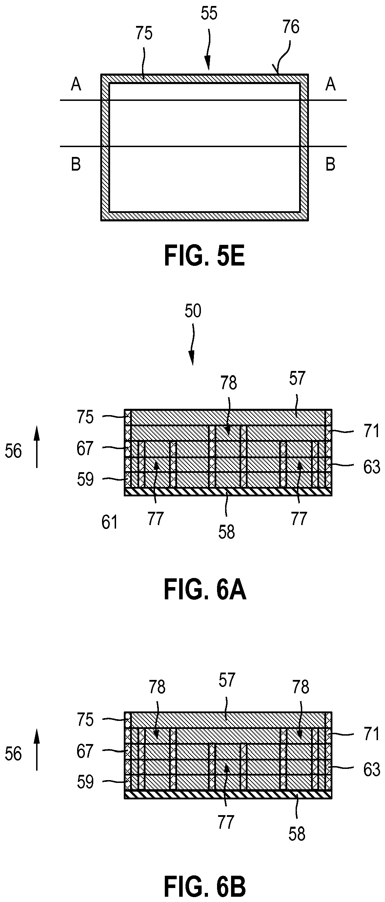

**FIGN. 5A-E** zeigen einen weiteren Grünling **50,** der als Quader ausgebildet ist und mit Hilfe des erfindungsgemäßen Verfahrens zur schichtweisen Fertigung eines Grünlings aus fünf übereinander liegenden zylinderförmigen Querschnittsbereichen **51, 52, 53, 54, 55** in einer Aufbaurichtung **56** aufgebaut wird. Dabei zeigt FIG. 5A den ersten Querschnittsbereich 51, FIG. 5B den zweiten Querschnittsbereich 52, FIG. 5C den dritten Querschnittsbereich 53, FIG. 5D den vierten Querschnittsbereich 54 und FIG. 5E den fünften Querschnittsbereich 55.

Der Grünling 50 wird aus einem pulverförmigen Werkstoff **57** und Einsatzelementen in Form von Schneidelementen hergestellt, die insbesondere als einzelne Hartstoffpartikel 42 ausgebildet sind, wobei der Grünling 50 im Folgenden als zweiter Grünling 50 bezeichnet wird. Die Einsatzelemente 42 sind an definierten Positionen im zweiten Grünling 50 angeordnet, wobei die Verteilung der Einsatzelemente 42 für den ersten und zweiten Grünling 10, 50 übereinstimmen. Während der erste Querschnittsbereich 11 beim ersten Grünling 10 das Grundelement 17 bildet, wird der zweite Grünling 50 auf einem Substrat **58** als Unterlage aufgebaut. Das Substrat 58 ist beispielsweise eine dünne Metallplatte, die in einem nachfolgenden Bearbeitungsprozess mit dem Grundkörper eines abrasiven Bearbeitungswerkzeugs verbunden wird. Das Substrat 58 übernimmt die Funktion des Grundelements 17 des ersten Grünlings 10.

Der erste Querschnittsbereich 51 umfasst einen ersten Außenring **59** mit einer ersten Außenmantelfläche **60** und erste Stützringe **61,** die erste Setzbereiche **62** umgeben. Der zweite Querschnittsbereich 52 umfasst einen zweiten Außenring **63** mit einer zweiten Außenmantelfläche **64** und zweite Stützringe **65,** die zweite Setzbereiche **66** umgeben. Der dritte Querschnittsbereich 53 umfasst einen dritten Außenring **67** mit einer dritten Außenmantelfläche **68** und dritte Stützringe **69,** die dritte Setzbereiche **70** umgeben. Der vierte Querschnittsbereich 54 umfasst einen vierten Außenring **71** mit einer vierten Außenmantelfläche **72** und vierte Stützringe **73,** die vierte Setzbereiche **74** umgeben. Der fünfte Querschnittsbereich 55 umfasst einen fünften Außenring **75** mit einer fünften Außenmantelfläche **76.**

Die Außenringe 59, 63, 67, 71, 75 der Querschnittsbereiche 51-55 sind in Form eines Rechteckzylinders aufgebaut und grenzen den zweiten Grünling 50 von dem umgebenden pulverförmigen Werkstoff 57 ab. Im Ausführungsbeispiel sind die Setzbereiche 62, 66, 70, 74 quadratisch ausgebildet und von quadratischen Stützringen 61, 65, 69, 73 umgeben. Anstelle der geschlossenen quadratischen Stützringe 61, 65, 69, 73 können andere geschlossene Querschnittsformen oder nicht-geschlossene Querschnittsformen für die Stützringe 61, 65, 69, 73 verwendet werden.

**FIGN. 6A****, B** zeigen einen ersten und zweiten Querschnitt durch den zweiten Grünling 50 parallel zur Aufbaurichtung 56 entlang der Schnittebenen A-A in den FIGN. 5A-E (FIG. 6A) und entlang der Schnittebenen B-B in den FIGN. 5A-E (FIG. 6B). Die fünf zylinderförmigen Querschnittsbereiche 51-55 des zweiten Grünlings 50 sind in Aufbaurichtung 56 übereinander angeordnet.

Beim Schichtaufbau des zweiten Grünlings 50 wird eine Außengeometrie erzeugt, die ein Austreten von pulverförmigem Werkstoff 57 aus dem zweiten Grünling 50 verhindert. Die Außengeometrie des zweiten Grünlings 50 wird von dem Substrat 58 und den Außenringen 59, 63, 67, 71, 75 gebildet. Das Substrat 58 wird mit dem ersten Außenring 59 verbunden, der erste Außenring 59 wird mit dem zweiten Außenring 63 verbunden, der zweite Außenring 63 wird mit dem dritten Außenring 67 verbunden, der dritte Außenring 67 wird mit dem vierten Außenring 71 verbunden und der vierte Außenring 71 wird mit dem fünften Außenring 75 verbunden.

Die Außengeometrie des zweiten Grünlings 50 ist im fünften Querschnittsbereich 55 nach oben offen ausgebildet, so dass der zweite Grünling 50 für einen nachfolgenden Verdichtungsprozess aufrecht transportiert werden muss. Um den zweiten Grünling 50 auch im fünften Querschnittsbereich 55 nach außen abzugrenzen, kann der fünfte Querschnittsbereich 55 alternativ ein Deckelement bilden, das mit dem vierten Außenring 71 verbunden wird. Dazu trägt der Druckkopf im fünften Querschnittsbereich 55 eine Klebeschicht auf, die die losen Pulverpartikel des pulverförmigen Werkstoffs 57 zum Deckelement verbindet.

Der zweite Grünling 50 weist fünf erste Stützstrukturen **77** und vier zweite Stützstrukturen **78** auf. Die ersten Stützstrukturen 77 werden von den ersten, zweiten und dritten Setzbereichen 62, 66, 70 aufgebaut und weisen eine erste Einsatzhöhe **h₁** auf. Die zweiten Stützstrukturen 78 werden von den ersten, zweiten, dritten und vierten Setzbereichen 62, 66, 70, 74 aufgebaut und weisen eine zweite Einsatzhöhe **h₂** auf. Die ersten und zweiten Stützstrukturen 77, 78 sind mit dem Substrat 58 verbunden und dadurch sicher im zweiten Grünling 50 fixiert.

Zum Aufbau der ersten Stützstrukturen 77 werden die ersten Stützringe 61 mit dem Substrat 58 verbunden, die zweiten Stützringe 65 werden mit den ersten Stützringen 61 verbunden und die dritten Stützringe 69 werden mit den zweiten Stützringen 65 verbunden. Zum Aufbau der zweiten Stützstrukturen 78 werden die ersten Stützringe 61 mit dem Substrat 58 verbunden, die zweiten Stützringe 65 werden mit den ersten Stützringen 61 verbunden, die dritten Stützringe 69 werden mit den zweiten Stützringen 65 verbunden und die vierten Stützringe 73 werden mit den dritten Stützringen 69 verbunden.

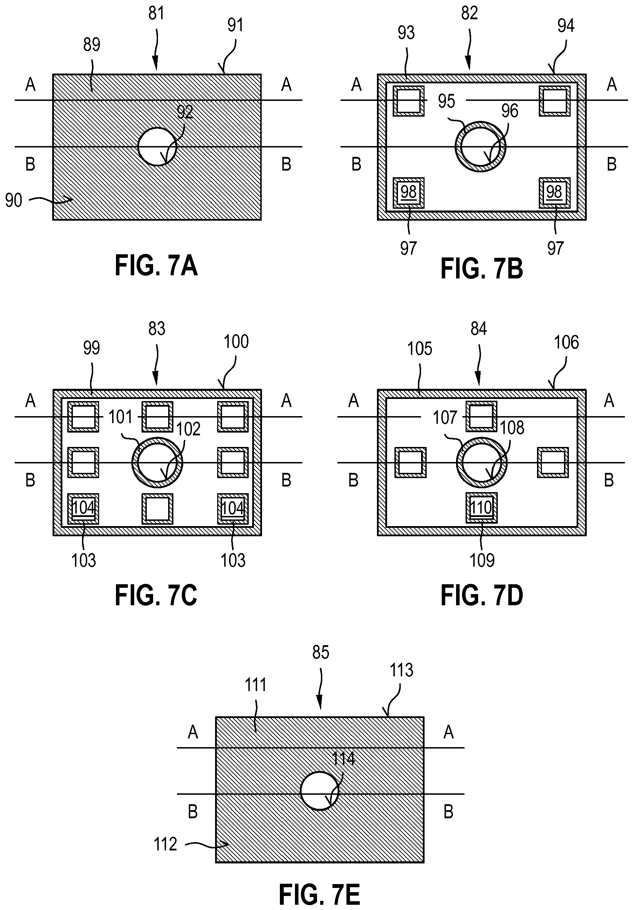

**FIGN. 7A-E** zeigen einen weiteren Grünling **80,** der als Quader mit einer innenliegenden Aussparung ausgebildet ist und mit Hilfe des erfindungsgemäßen Verfahrens zur schichtweisen Fertigung eines Grünlings aus fünf übereinander liegenden zylinderförmigen Querschnittsbereichen **81, 82, 83, 84, 85** in einer Aufbaurichtung **86** aus einem pulverförmigen Werkstoff **87** aufgebaut wird. Dabei zeigt FIG. 7A den ersten Querschnittsbereich 81, FIG. 7B den zweiten Querschnittsbereich 82, FIG. 7C den dritten Querschnittsbereich 83, FIG. 7D den vierten Querschnittsbereich 84 und FIG. 7E den fünften Querschnittsbereich 85.

Der Grünling 80 wird im Folgenden als dritter Grünling 80 bezeichnet, der sich vom ersten Grünling 10 der FIG. 1 dadurch unterscheidet, dass der dritte Grünling 80 eine durchgehende innenliegende Aussparung **88** und acht Einsatzelemente 42 aufweist, die an definierten Positionen im dritten Grünling 80 angeordnet werden. Für die Einsatzelemente 42 werden in den Querschnittsbereichen 81-85 des dritten Grünlings 80 Setzbereiche definiert, die von Stützringen umgeben sind.

Der erste Querschnittsbereich 81 bildet ein Grundelement **89** mit einer Grundfläche **90,** die der ersten Querschnittsfläche des ersten Querschnittsbereichs 81 entspricht, und einer Höhe, die der ersten Schichtdicke d₁ des ersten Querschnittsbereichs 81 entspricht. Das Grundelement 89 weist eine erste Außenmantelfläche **91** in Form eines Rechteckzylinders und eine erste Innenmantelfläche **92** in Form eines Kreiszylinders auf.

Der zweite Querschnittsbereich 81 umfasst einen zweiten Außenring **93** mit einer zweiten Außenmantelfläche **94,** einen zweiten Innenring **95** mit einer zweiten Innenmantelfläche **96** und vier zweite Stützringe **97,** die zweite Setzbereiche **98** umgeben. Der dritte Querschnittsbereich 83 umfasst einen dritten Außenring **99** mit einer dritten Außenmantelfläche **100,** einen dritten Innenring **101** mit einer dritten Innenmantelfläche **102** und acht dritte Stützringe **103,** die dritte Setzbereiche **104** umgeben. Der vierte Querschnittsbereich 84 umfasst einen vierten Außenring **105** mit einer vierten Außenmantelfläche **106,** einen vierten Innenring **107** mit einer vierten Innenmantelfläche **108** und vier vierte Stützringe **109,** die vierte Setzbereiche **110** umgeben.

Der fünfte Querschnittsbereich 85 bildet ein Deckelement **111** mit einer Deckfläche **112,** die der fünften Querschnittsfläche des fünften Querschnittsbereichs 85 entspricht, und einer Höhe, die der fünften Schichtdicke d₅ des fünften Querschnittsbereichs 85 entspricht. Das Deckelement 111 weist eine fünfte Außenmantelfläche **113** in Form eines Rechteckzylinders und eine fünfte Innenmantelfläche **114** in Form eines Kreiszylinders auf.

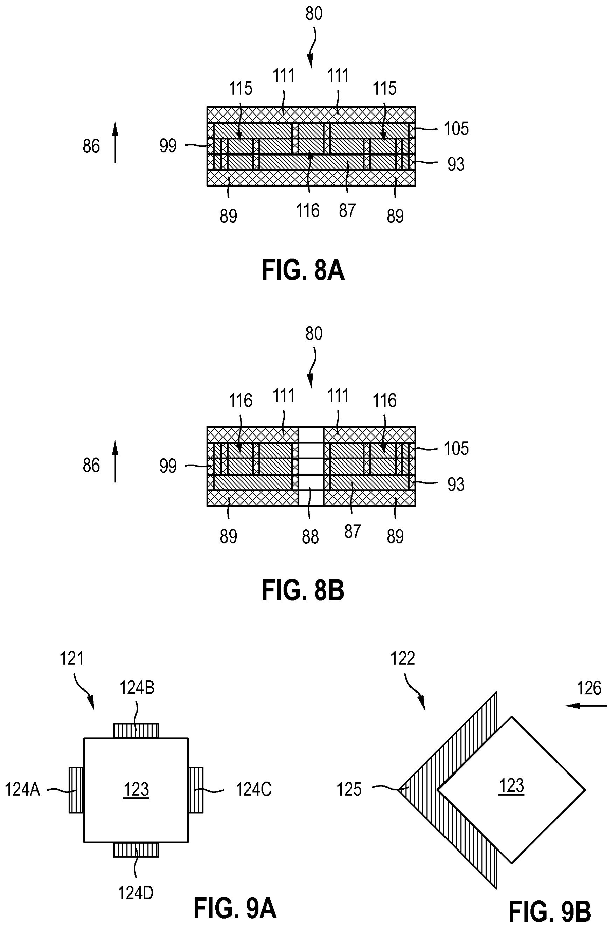

**FIGN. 8A****, B** zeigen einen ersten und zweiten Querschnitt durch den dritten Grünling 80 parallel zur Aufbaurichtung 86 entlang der Schnittlinien A-A in den FIGN. 7A-E (FIG. 8A) und entlang der Schnittebenen B-B in den FIGN. 7A-E (FIG. 8B). Die fünf Querschnittsbereiche 81-85 des dritten Grünlings 80 sind in Aufbaurichtung 86 übereinander angeordnet.

Beim Schichtaufbau des dritten Grünlings 80 wird eine geschlossene Außengeometrie erzeugt, die ein Austreten von pulverförmigem Werkstoff 87 aus dem dritten Grünling 80 verhindert. Die geschlossene Außengeometrie des dritten Grünlings 80 wird von dem Grundelement 89, den Außenringen 93, 99, 105, den Innenringen 95, 101, 107 und dem Deckelement 111 gebildet. Die Außenringe 93, 99, 105 werden auch als äußere Grenzringe und die Innenringe 95, 101, 107 als innere Grenzringe bezeichnet, wobei die äußeren und inneren Grenzringe unter dem Begriff "Grenzringe" zusammengefasst werden. Das Grundelement 89 wird mit den zweiten Grenzringen 93, 95 verbunden, die zweiten Grenzringe 93, 95 werden mit den dritten Grenzringen 99, 101 verbunden, die dritten Grenzringe 99, 101 werden mit den vierten Grenzringen 105, 107 verbunden und die vierten Grenzringe 105, 107 werden mit dem Deckelement 111 verbunden.

Der dritte Grünling 80 weist vier erste Stützstrukturen **115** und vier zweite Stützstrukturen **116** auf. Die ersten Stützstrukturen 115 werden von den zweiten und dritten Setzbereichen 98, 104 gebildet und weisen eine erste Einsatzhöhe **h₁** auf. Die zweiten Stützstrukturen 116 werden von den dritten und vierten Setzbereichen 104, 110 gebildet und weisen eine zweite Einsatzhöhe **h₂** auf. FIG. 8A zeigt zwei erste Stützstrukturen 115 und eine zweite Stützstruktur 116 und FIG. 8B zeigt zwei zweite Stützstrukturen 116 und die Aussparung 88.

Die ersten Stützstrukturen 115 sind mit dem Grundelement 89 verbunden und die zweiten Stützstrukturen 116 sind nicht mit dem Grundelement 89 verbunden. Die ersten Stützstrukturen 115 sind durch die Verbindung mit dem Grundelement 89 im dritten Grünling 80 fixiert und werden beim Auftragen einer weiteren Pulverschicht nicht verschoben. Die zweite Einsatzhöhe h₂ der zweiten Stützstrukturen 116 ist ausschließlich an die Abmessungen der Einsatzelemente 42 angepasst. Wenn die zweiten Stützstrukturen 116 ausreichend im pulverförmigen Werkstoff 87 befestigt sind und beim Auftragen einer weiteren Pulverschicht nicht verschoben werden, hat diese Variante den Vorteil, dass der Anteil an Klebe- oder Bindemittel im dritten Grünling 80 reduziert ist. Für den Fall, dass die zweiten Stützstrukturen 116 nicht ausreichend im pulverförmigen Werkstoff 87 befestigt sind, können die zweiten Stützstrukturen 116 mit dem Grundelement 89 verbunden werden. Dazu werden im ersten Querschnittsbereich 81 weitere erste Stützringe aufgebaut, die mit dem Grundelement 89 und den zweiten Stützringen der zweiten Stützstrukturen 116 verbunden werden.

**FIGN. 9A****, B** zeigen eine erste und zweite Querschnittsform für Stützringe **121, 122,** die Setzbereiche für ein Einsatzelement **123** umgeben. Die Stützringe 121, 122 können die Setzbereiche 23, 27, 31 des ersten Grünlings 10, die Setzbereiche 62, 66, 70, 74 des zweiten Grünlings 50 und/oder die Setzbereiche 98, 104, 110 des dritten Grünlings 80 umgeben. Dabei ersetzen die Stützringe 121, 122 die Stützringe 22, 26, 30 des ersten Grünlings 10, die Stützringe 61, 65, 69, 73 des zweiten Grünlings 50 und/oder die Stützringe 97, 103, 109 des dritten Grünlings 80 und bilden die ersten und zweiten Stützstrukturen 35, 36, 77, 78, 115, 116.

FIG. 9A zeigt den Stützring 121, der eine nicht-geschlossene Stützstruktur für das Einsatzelement 123 bildet. Der Stützring 121 besteht aus mehreren Stützabschnitten **124A, 124B, 124C, 124D,** die das Einsatzelement 123 umgeben und ein Verschieben des Einsatzelementes 123 verhindern.

FIG. 9B zeigt den Stützring 122, der eine nicht-geschlossene Stützstruktur für das Einsatzelement 123 bildet. Der Stützring 122 besteht aus einem Stützabschnitt **125,** an dem das Einsatzelement 123 anliegt. Der Stützabschnitt 125 wird so platziert, dass das Einsatzelement 123 beim Auftragen der nächsten Pulverschicht vom Stützabschnitt 125 gegen Verschieben gesichert wird. Dazu wird der Stützabschnitt 125 auf der Seite der Einsatzelemente 123 angeordnet, die der Auftragsrichtung **126** der nächsten Pulverschicht abgewandt ist.

## Patentansprüche

1. Verfahren zur schichtweisen Fertigung eines Grünlings (10; 50; 80) aus pulverförmigem Werkstoff (41; 57; 87) mit Einsatzelementen (42; 123), die an definierten Positionen im pulverförmigen Werkstoff (41; 57; 87) angeordnet werden, basierend auf dreidimensionalen Daten des Grünlings (10; 50; 80), mit den Verfahrensschritten:
▪ der Grünling (10; 50; 80) wird in einer Aufbaurichtung (16; 56; 86) in N, N ≥ 2 aufeinanderfolgende zylinderförmige Querschnittsbereiche (11, 12, 13, 14, 15; 51, 52, 53, 54, 55; 81, 82, 83, 84, 85) zerlegt, wobei jeder Querschnittsbereich (11-15; 51-55; 81-85) aus einer zweidimensionalen Querschnittsfläche senkrecht zur Aufbaurichtung (16; 56; 86) und einer Schichtdicke (d₁, d₂, d₃, d₄, d₅) parallel zur Aufbaurichtung (16; 56; 86) gebildet wird,
▪ auf eine Aufbauebene (43) senkrecht zur Aufbaurichtung (16; 56; 86) werden N, N ≥ 2 Pulverschichten (44, 45, 46, 47, 48) des pulverförmigen Werkstoffs (41; 57; 87) aufgebracht und
▪ die Einsatzelemente (42; 123) werden an den definierten Positionen im pulverförmigen Werkstoff (41; 57; 87) angeordnet,
**dadurch gekennzeichnet, dass** in den Querschnittsbereichen (12, 13, 14; 52, 53, 54; 82, 83, 84) des Grünlings (10; 50; 80), die die definierten Positionen für die Einsatzelemente (42; 123) umfassen, Setzbereiche (23, 27, 31; 62, 66, 70, 74; 98, 104, 110) für die Einsatzelemente (42; 123) definiert werden und vor dem Anordnen der Einsatzelemente (42) im pulverförmigen Werkstoff (41) lose Pulverpartikel, die die Setzbereiche (23, 27, 31; 62, 66, 70, 74; 98, 104, 110) umgeben, zumindest teilweise miteinander verbunden werden.

2. Verfahren nach Anspruch 1, **dadurch gekennzeichnet, dass** die losen Pulverpartikel, die die Setzbereiche (23, 27, 31; 62, 66, 70, 74; 98, 104, 110) für die Einsatzelemente (42) umgeben, in einer geschlossenen Stützstruktur (35, 36; 77, 78; 115, 116) miteinander verbunden werden.

3. Verfahren nach Anspruch 1, **dadurch gekennzeichnet, dass** die losen Pulverpartikel, die die Setzbereiche (23, 27, 31; 62, 66, 70, 74; 98, 104, 110) für die Einsatzelemente (123) umgeben, in einer nicht-geschlossenen Stützstruktur (35, 36; 77, 78; 115, 116) miteinander verbunden werden.

4. Verfahren nach Anspruch 3, **dadurch gekennzeichnet, dass** die nicht-geschlossene Stützstruktur (35, 36; 77, 78; 115, 116) mehrere Stützabschnitte (124A, 124B, 124C, 124D) aufweist, wobei die Stützabschnitte (124A, 124B, 124C, 124D) um die Einsatzelemente (123) angeordnet werden.

5. Verfahren nach Anspruch 3, **dadurch gekennzeichnet, dass** die nicht-geschlossene Stützstruktur (35, 36; 77, 78; 115, 116) zumindest einen Stützabschnitt (125) aufweist, wobei der Stützabschnitt (125) auf einer der Auftragsrichtung (126) der nächsten Pulverschicht abgewandten Seite der Einsatzelemente (123) angeordnet wird.

6. Verfahren nach einem der Ansprüche 1 bis 5, **dadurch gekennzeichnet, dass** für den ersten Querschnittsbereich (11; 81) ein Grundelement (17; 89) mit einer Grundfläche (18; 90), die der ersten Querschnittsfläche des ersten Querschnittsbereichs (11; 81) entspricht, und einer Höhe, die der ersten Schichtdicke (d₁) des ersten Querschnittsbereichs (11; 81) entspricht, definiert wird und die losen Pulverpartikel des pulverförmigen Werkstoffes (41; 87) im Grundelement (17; 89) miteinander verbunden werden.

7. Verfahren nach einem der Ansprüche 1 bis 5, **dadurch gekennzeichnet, dass** für jede zylinderförmige Mantelfläche (60) des ersten Querschnittsbereichs (51) ein erster Grenzring (59) mit einer Geometrie, die der zylinderförmigen Mantelfläche (60) des ersten Querschnittsbereichs (51) entspricht, und einer Höhe, die der ersten Schichtdicke (d₁) des ersten Querschnittsbereichs (51) entspricht, definiert wird, die erste Pulverschicht (44) des pulverförmigen Werkstoffes (41) auf ein Substrat (58) aufgebracht wird und die ersten Grenzringe (59) mit dem Substrat (58) verbunden werden.

8. Verfahren nach einem der Ansprüche 6 bis 7, **dadurch gekennzeichnet, dass** die Stützstrukturen (35; 77, 78; 115) mit dem Grundelement (17; 89) oder mit dem Substrat (58) verbunden werden.

9. Verfahren nach einem der Ansprüche 6 bis 7, **dadurch gekennzeichnet, dass** für jede zylinderförmige Mantelfläche (21, 26, 29; 63, 67, 71; 94, 96, 100, 102, 106, 108) des zweiten bis N-1-ten Querschnittsbereichs (12, 13, 14; 52, 53, 54; 82, 83, 84) ein zweiter bis N-1-ter Grenzring (20, 24, 28; 63, 67, 71; 93, 95, 99, 101, 105, 107) mit einer Geometrie, die der zylinderförmigen Mantelfläche (21, 26, 29; 63, 67, 71; 94, 96, 100, 102, 106, 108) des zweiten bis N-1-ten Querschnittsbereichs (12, 13, 14; 52, 53, 54; 82, 83, 84) entspricht, und einer Höhe, die der Schichtdicke (d₂, d₃, d₄) des zweiten bis N-1-ten Querschnittsbereichs (12, 13, 14; 52, 53, 54; 82, 83, 84) entspricht, definiert wird.

10. Verfahren nach Anspruch 9, **dadurch gekennzeichnet, dass** die losen Pulverpartikel der zweiten bis N-1-ten Grenzringe (20, 24, 28; 63, 67, 71; 93, 95, 99, 101, 105, 107) miteinander verbunden werden und die zweiten bis N-1-ten Grenzringe (20, 24, 28; 63, 67, 71; 93, 95, 99, 101, 105, 107) jeweils mit dem darunter liegenden Grundelement (17; 89) oder den darunter liegenden ersten bis N-2-ten Grenzringen (20, 24; 59, 63, 67; 93, 95, 99, 101) verbunden werden.

11. Verfahren nach Anspruch 10, **dadurch gekennzeichnet, dass** für jede zylinderförmige Mantelfläche (76) des N-ten Querschnittsbereich (55) ein N-ter Grenzring (75) mit einer Geometrie, die der zylinderförmigen Mantelfläche (76) des N-ten Querschnittsbereichs (55) entspricht, und einer Höhe, die der N-ten Schichtdicke (d₅) des N-ten Querschnittsbereichs (55) entspricht, definiert wird, die losen Pulverpartikel der N-ten Grenzringe (75) miteinander verbunden werden und die N-ten Grenzringe (75) mit den darunter liegenden N-1-ten Grenzringen (71) verbunden werden.

12. Verfahren nach Anspruch 10, **dadurch gekennzeichnet, dass** für den N-ten Querschnittsbereich (15; 85) ein Deckelement (32; 111) mit einer Deckfläche (33; 112), die der N-ten Querschnittsfläche des N-ten Querschnittsbereichs (15; 85) entspricht, und einer Höhe, die der N-ten Schichtdicke (d₅) des N-ten Querschnittsbereichs (15; 85) entspricht, definiert wird, die losen Pulverpartikel des pulverförmigen Werkstoffes (41; 87) im Deckelement (32; 111) miteinander verbunden werden und das Deckelement (32; 111) mit den darunter liegenden N-1-ten Grenzringen (23; 105, 107) verbunden wird.
